# EUROPÄISCHE PATENTSCHRIFT

(11) **EP 1 329 300 B1**
(45) Veröffentlichungstag und Bekanntmachung des Hinweises auf die Patenterteilung: **06.10.2004**
(21) Anmeldenummer: 02028453.5
(22) Anmeldetag: 19.12.2002
(51) Int. Cl.: B29C 45/17, B29C 45/64

(54) **Spritzgiessmaschine für den Einsatz unter Reinraumbedingungen mit zumindest einer ummantelten Säule**
Injection moulding machine for use under cleanroom conditions having at least one encased column
Presse à injecter pour être employée dans une salle blanche ayant une colonne enrobée

(30) Priorität: 11.01.2002 DE 10200813
(43) Veröffentlichungstag der Anmeldung: 23.07.2003
(73) Patentinhaber: Krauss-Maffei Kunststofftechnik GmbH, 80997 München (DE)
(72) Erfinder: Schmidt, Bengt, 82041 Oberhaching (DE); Hörl, Thomas, 82194 Gröbenzell (DE); Gessner, Klaus, 85221 Dachau (DE); Pipelka, Friedrich, 3400 Klosterneuburg (AT)
(74) Vertreter: Zollner, Richard, Dipl.-Phys.

(56) Entgegenhaltungen:
- WOBBE H ET AL: "VERPACKUNGEN IM REINRAUM SPRITZGIESSEN PACKAGING INJECTION MOULDING UNDER CLEAN-ROOM CONDITIONS" KUNSTSTOFFE, CARL HANSER VERLAG. MUNCHEN, DE, Bd. 86, Nr. 5, 1. Mai 1996 (1996-05-01), Seiten 640-642,644, XP000587714 ISSN: 0023-5563
- ECKARDT H: "CLEAN-ROOM INJECTION MOULDING" PE PLAST EUROPE, CARL HANSER, MUNCHEN, DE, Nr. 1, 1. März 1992 (1992-03-01), Seite 54,55 XP000329412 ISSN: 0941-3596
- MEYER D: "SPRITZGIESSEN IM REINRAUM" KUNSTSTOFFE, CARL HANSER VERLAG. MUNCHEN, DE, Bd. 82, Nr. 11, 1. November 1992 (1992-11-01), Seiten 1073-1074, XP000322925 ISSN: 0023-5563

## Beschreibung

Die Erfindung betrifft eine Spritzgießmaschine mit einer Plastifiziereinheit und einer Schließeinheit, wobei die Schließeinheit mindestens eine Säule umfasst, die ein Stützteil vollständig durchdringt und relativ zu diesem beweglich ist.

Es ist bekannt, Spritzgießmaschinen, die insbesondere unter Reinraumbedingungen zur Anwendung kommen sollen, mit modifizierten Dichtungssystemen an den relativ zu einem Stützteil bewegten Säulen zu versehen, um die Abgabe von Verunreinigungen zu reduzieren. Hier kommen z. B. Dichtungen aus dem Material Viton™ von der Firma DuPont Dow elastomers zum Einsatz.

Bei Anwendung von Spritzgießmaschinen unter Reinraumbedingungen wird die Plastifiziereinheit bis zur Werkzeugaufspannplatte im allgemeinen unter einer geringeren Reinraumklasse gehalten, während die Schließeinheit mit dem Werkzeug höheren Reinraumanforderungen unterworfen ist. In der Praxis wird dies meist durch zwei voneinander abdichtend getrennte Raumteile verwirklicht, die jeweils über separate Filteranlagen verfügen. Zu Wartungszwecken und bei Werkzeugwechseln wird die gesamte Spritzgießmaschine in den Bereich mit der niedrigeren Reinraumklasse gezogen.

Eine ähnliche Lösung wird vergeschlagen in H.Eckhardt: "Clean-room injection Moulding", plast europe, März 1992, auf der der öberbegriff von Anspruch 1 beruht.

Trotzdem kommt es im Betrieb noch zu Verunreinigungen, die im wesentlichen aus Abrieb aufgrund von Gleitreibung bei der Relativbewegung zwischen Säule und der am Übergang in das Stützteil angebrachten Dichtung bestehen sowie aus Schmiermittelpartikeln, die vom auf der Säule vorhandenen Schmiermittelfilm ausdampfen. Die Relativbewegung von Säule und Stützteil gleicht zudem einer Pumpbewegung und trägt noch stärker zur Verteilung der Verunreinigungen bei. Bei Laboruntersuchungen an Schließeinheiten einer Spritzgießmaschine wurde festgestellt, dass die modifizierten Dichtungssysteme am Eindringpunkt der Schließsäule in eine feste Werkzeugaufspannplatte zwar die Anzahl der abgegebenen Verunreinigungen verringern, für strengere Reinraumanforderungen aber noch nicht ausreichend sind.

Die vorliegende Erfindung hat die Aufgabe, eine reinraumtaugliche Spritzgießmaschine zur Verfügung zu stellen.

Diese Aufgabe wird durch die im kennzeichnenden Teil von Anspruch 1 angegeben Merkmale gelöst.

Erfindungsgemäß werden in den Reinraum ausgetragene Verunreinigungen mittels einer Absaugvorrichtung entfernt.

Durch die Erfindung wird so eine effektive Reduzierung der von einem bewegten Säulen-Stützteil-Übergang in die Umgebung ausgetragenen Partikel auf technisch einfache Weise erreicht. Diese Reduzierung ist vor allem im Bereich der erhöhten Reinraumanforderungen von Bedeutung, und ist deshalb zwischen den Schließsäulen und der Werkzeugaufspannplatte einer erfindungsgemäßen Spritzgießmaschine besonders wichtig, da gerade hier mit jedem Spritzvorgang auch eine Schließbewegung stattfindet.

Erfindungsgemäß erfolgt die Reduzierung der ausgetragenen Verunreinigungen durch das zumindest teilweise Ummanteln der Säule auf der Seite des Stützteils, auf der diese freigesetzt werden, mit einer Art Manschette, die direkt an das Stützteil angrenzt. Durch die Manschette einerseits und die Säule andererseits wird ein Ringraum definiert, der die Säule umgibt. An dieser Ummantelung wird zumindest ein Anschlussstutzen vorgesehen, der mit einer Absaugvorrichtung, wie z. B. einer Pumpe, einem Vakuumstaubsauger oder einer Venturidüse in Verbindung bringbar ist. Durch das Anschließen und Betreiben dieser Absaugvorrichtung wird in dem Ringraum ein Unterdruck erzeugt, und auf dieser Seite des Stützteils ausgetragene Verunreinigungen wie Abrieb und aus dem auf der Säule verbliebenem Schmiermittelfilm ausgedampfte Partikel werden abgesaugt.

In einer besonders bevorzugten Ausführungsform wird die Ummantelung selbst im wesentlichen luftdicht ausgeführt sein, und eine dichtende Verbindung mit dem Stützteil unterhalten. Auf der stützteilabgewandten Seite aber steht der Ringraum in offener Verbindung zur Umgebung. Die Anschlussstutzen sind an der dem Stützteil zugewandten Seite der Ummantelung angebracht und mit einer Absaugvorrichtung verbunden, die sich vorteilhafterweise in dem Bereich mit geringeren Reinraumanforderungen, d.h. im Bereich der Plastifizierung, befindet. Die Verbindung erfolgt bevorzugt über Schläuche, die dann abgedichtet durch die Trennvorrichtung zwischen den unterschiedlichen Reinraumklassen geführt werden müssen. Während des Betriebs der Spritzgießmaschine läuft die Absaugvorrichtung und saugt sowohl am Übergang zwischen Säule und Stützteil abgegebene Partikel ab, als auch Schmiermittelpartikel, die von dem die Säule im Bereich des Säulenhubs überziehenden Schmiermittelfilm, der zu diesem Zeitpunkt freiliegt, emittiert werden.

Dadurch, dass der Ringraum auf der stützteilabgewandten Seite nicht geschlossen ist und die Anschlussstutzen im an das Stützteil anschließenden Bereich der Ummantelung liegen, wird eine besonders gute Durchströmung des Ringraums gewährleistet, und damit ein effektives Absaugen der Verunreinigungspartikel sichergestellt.

Es besteht jedoch auch die Möglichkeit, die Anschlussvorrichtung in etwa in der Mitte der Ummantelung anzubringen, während der von der Manschette und der Säule gebildete Ringraum auf der stützteilabgewandten Seite weiterhin offen steht. Um eine ähnlich gute Durchströmung des Ringraums wie in der bevorzugten Ausführungsform und damit die Absaugung von entstandenen Verunreinigungen zu gewährleisten, müssten im stützteilseitigen Bereich der Ummantelung Öffnungen wie z. B. Schlitze vorgesehen sein, durch die Luft aus dem Reinraum einströmen kann.

Des weiteren ist es möglich, den durch die Ummantelung geformten Ringraum auf der stützteilabgewandten Seite durch eine Dichtung gegen die Säule abzudichten. Durch zusätzlich vorgesehene Öffnungen kann dann Reinraumluft eingesaugt werden, die zusammen mit Verunreinigungspartikeln über die im Bereich der Manschette angebrachte Anschlussvorrichtung abgesaugt wird. Der Nachteil dieser Ausführungsform besteht darin, dass durch die zusätzliche Dichtung auf der stützteilabgewandten Seite weitere Verunreinigungen in Form von Abrieb erzeugt und teilweise in den Reinraum emittiert werden.

Die teilweise Ummantelung selbst kann beispielsweise aus zwei im wesentlichen halbzylinderförmigen Profilen bestehen, die im Anschluss an das Stützteil um die Säule montiert werden, mindestens eine Anschlussvorrichtung aufweisen und gegeneinander abgedichtet sind. Zum Verbinden der beiden Profile können einfachsten Falls Rohrschellen verwendet werden. Die Anschlussvorrichtung selbst wird oft als Anschlussstutzen ausgebildet sein.

Dies bietet die Möglichkeit, auch bereits in Benutzung befindliche Spritzgießmaschinen schnell und einfach mit einer Ummantelung nachzurüsten.

Im folgenden wird ein Ausführungsbeispiel der erfindungsgemäßen Spritzgießmaschine anhand einer einzigen Zeichnung näher erläutert. In der Figur ist eine Säule einer nicht näher dargestellten Schließeinheit einer erfindungsgemäßen Spritzgießmaschine mit teilweiser Ummantelung schematisch im Schnitt dargestellt.

Die Figur zeigt eine feste Werkzeugaufspannplatte 1, die von einer Säule 2 der Schließeinheit durchdrungen wird. In diesem Fall ist die Werkzeugaufspannplatte 1 feststehend, während die Säule 2 beweglich ist. Sobald die Säule 2 während der Rückhubbewegung aus der Werkzeugaufspannplatte 1 ausfährt, ist sie mit einer feinen Schmiermittelschicht überzogen, die von der Schmierung der Gleitlagerung in der festen Werkzeugaufspannplatte herrührt und die von den verwendeten Dichtungen nicht vollständig zurückgehalten werden kann.

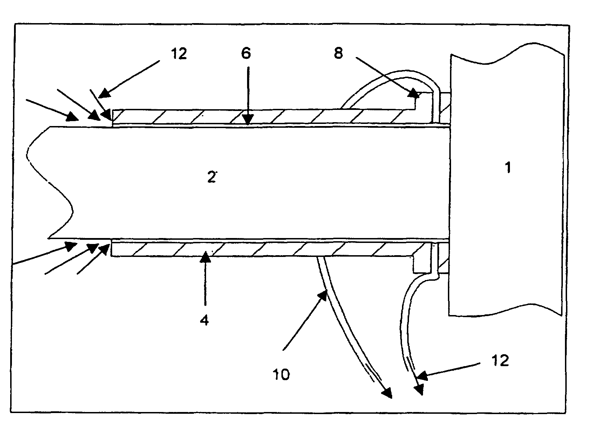

Die Säule 2 wird deshalb vorzugsweise über den Hubbereich mit einer Ummantelung 4 versehen, deren radialer Abstand zur Säule 2 im wesentlichen konstant ist, und die mit der Säule 2 den Ringraum 6 bildet. Die Ummantelung 4 ist dichtend mit der festen Werkzeugaufspannplatte 1 verbunden und im Anschlussbereich an diese mit zwei Anschlussstutzen 8 versehen. Über Schläuche 10 sind die Anschlussstutzen 8 mit einer nicht dargestellten Absaugvorrichtung verbunden, die in dem Ringraum 6 einen Unterdruck erzeugt, und somit einen Luft- und Partikelstrom vom offenen, in Fig. 1 linken Ende, der Ummantelung 4 zu den Anschlussstutzen 8 induziert, wie durch die Pfeile 12 angedeutet. Verunreinigungen, die durch die Gleitreibung zwischen Säule 2 und fester Werkzeugaufspannplatte 1 bzw. einer nicht dargestellten Dichtung erzeugt und in den Ringraum 6 ausgetragen werden, werden ebenso wie Schmiermittelpartikel, die aus dem auf der Säule 2 verbleibenden Schmiermittelfilm ausdampfen, von der erzeugten Strömung erfasst und aus dem Reinraum entfernt.

Die erfindungsgemäße Ummantelung 4 kann auch leicht nachgerüstet werden, vor allem wenn sie aus zwei Halbschalen besteht, die mittels Dichtungen miteinander und mit der festen Werkzeugaufspannplatte verbunden werden.

Obwohl die Beschreibung auf eine Säule 2 einer Schließeinheit einer Spritzgießmaschine eingeht, kann die erfindungsgemäße Ummantelung einer relativ zu einem Stützteil beweglichen Säule auch an anderen solchen Einheiten, bei denen Reinraumtauglichkeit gefordert ist, zum Einsatz kommen, so z. B. bei einer Auswerfereinheit.

### Bezugszeichenliste

- 1: feste Werkzeugaufspannplatte (FWAP)
- 2: Schließsäule
- 4: Ummantelung
- 6: Ringraum
- 8: Anschlussstutzen
- 10: Absaugschlauch
- 12: Partikelbewegung

## Patentansprüche

1. Spritzgießmaschine mit einer Plastifiziereinheit und einer Schließeinheit, wobei die Schließeinheit mindestens eine Säule (2) umfasst, die ein Stützteil (1) vollständig durchdringt und relativ zu diesem beweglich ist,
**dadurch gekennzeichnet, dass**
an mindestens einer Säule (2) eine zumindest teilweise Ummantelung (4) vorgesehen ist, die direkt an das Stützteil (1) angrenzt, einen die Säule (2) zumindest teilweise umgebenden Ringraum (6) definiert und zumindest eine Anschlussvorrichtung (8) aufweist, über die der Ringraum (6) mit einer Absaugvorrichtung in Verbindung bringbar ist.

2. Spritzgießmaschine nach Anspruch 1,
**dadurch gekennzeichnet, dass**
die Ummantelung (4) selbst im wesentlichen luftdicht ist.

3. Spritzgießmaschine nach Anspruch 1 oder Anspruch 2,
**dadurch gekennzeichnet, dass**
der Ringraum (6) zumindest an einer Stelle in offener Verbindung zur Umgebung steht.

4. Spritzgießmaschine nach Anspruch 3,
**dadurch gekennzeichnet, dass**
der Ringraum (6) auf der dem Stützteil (1) abgewandten Seite offener Verbindung zur Umgebung steht.

5. Spritzgießmaschine nach einem der Ansprüche 1 bis 4,
**dadurch gekennzeichnet, dass**
die Ummantelung (4) dicht mit dem Stützteil (1) verbunden ist.

6. Spritzgießmaschine nach einem der Ansprüche 1 bis 5,
**dadurch gekennzeichnet, dass**
die Anschlussvorrichtung bzw. die Anschlussvorrichtungen (8) im stützteilseitigen Bereich der Ummantelung (4) angeordnet sind.

7. Spritzgießmaschine nach einem der Ansprüche 1 bis 6,
**dadurch gekennzeichnet, dass**
die Ummantelung (4) aus zwei im wesentlichen halbzylinderförmigen, gegeneinander abgedichteten Profilen besteht.

8. Spritzgießmaschine nach Anspruch 7,
**dadurch gekennzeichnet, dass**
die Profile mit Gummidichtungen gegeneinander abgedichtet sind.

9. Spritzgießmaschine nach Anspruch 7 oder Anspruch 8,
**dadurch gekennzeichnet, dass** ,
die Profile mit Rohrschellen miteinander verbunden werden.

10. Spritzgießmaschine nach einem der vorhergehenden Ansprüche,
**dadurch gekennzeichnet, dass**
das Stützteil (1) eine feste oder bewegliche Werkzeugaufspannplatte einer Spritzgießmaschine ist.

11. Spritzgießmaschine nach einem der vorhergehenden Ansprüche,
**dadurch gekennzeichnet, dass**
die Säule (2) eine feste oder bewegliche Schließsäule einer Spritzgießmaschine ist.

12. Spritzgießmaschine nach einem der vorhergehenden Ansprüche,
**dadurch gekennzeichnet, dass**
die Anschlussvorrichtung bzw. die Anschlussvorrichtungen (8) als Anschlussstutzen ausgebildet sind.

13. Ummantelung für eine Spritzgießmaschine gemäß einem der Ansprüche 1 bis 12,
**dadurch gekennzeichnet, dass**
zwei im wesentlichen halbzylinderförmige Profile vorgesehen sind, die gegeneinander dichtend verbunden werden können, und
mindestens eine Anschlussvorrichtung (8) an einem oder beiden Profilen vorgesehen ist, über die der durch die Profile eingeschlossene Raum mit einer Absaugvorrichtung in Verbindung bringbar ist.

14. Ummantelung nach Anspruch 13,
**dadurch gekennzeichnet, dass**
Mittel vorgesehen sind, um die Profile an einem Stützteil (1) der Spritzgießmaschine zu befestigen.

15. Ummantelung nach Anspruch 13 oder 14,
**dadurch gekennzeichnet, dass**
Gummidichtungen zur Abdichtung der im wesentlichen halbzylinderförmigen Profile gegeneinander vorgesehen sind.

16. Ummantelung nach Anspruch 13 bis 15,
**dadurch gekennzeichnet, dass**
Rohrschellen zur Verbindung der im wesentlichen halbzylinderförmigen Profile vorgesehen sind.

17. Ummantelung nach Anspruch 13 bis 16,
**dadurch gekennzeichnet, dass**
die im wesentlichen halbzylinderförmigen Profile selbst im wesentlichen luftdicht sind.

18. Ummantelung nach einem der Ansprüche 13 bis 17,
**dadurch gekennzeichnet, dass**
Mittel zur Abdichtung der im wesentlichen halbzylinderförmigen Profile gegenüber dem Stützteil (1) ausgebildet sind.

19. Ummantelung nach einem der Ansprüche 14 bis 18,
**dadurch gekennzeichnet, dass**
die Anschlussvorrichtung bzw. die Anschlussvorrichtungen (8) auf der Seite der Profile angeordnet sind, an der auch die Mittel zur Befestigung am Stützteil (1) liegen.

20. Ummantelung nach einem der Ansprüche 13 bis 19,
**dadurch gekennzeichnet, dass**
die Anschlussvorrichtung bzw. die Anschlussvorrichtungen (8) als Anschlussstutzen ausgebildet sind.

## Claims

1. Injection moulding machine comprising a plasticizing unit and a closing unit, the closing unit comprising at least one column (2) which completely penetrates a support element (1) and is movable relative thereto, **characterised in that** an at least partial casing (4) is provided on at least one column (2), which casing (4) directly adjoins the support element (1), defines an annular space (6) at least partially surrounding the column (2) and has at least one connection device (8) via which the annular space (6) can be connected to a suction device.

2. Injection moulding machine according to claim 1, **characterised in that** the casing (4) is itself substantially air-tight.

3. Injection moulding machine according to claim 1 or claim 2, **characterised in that** the annular space (6) is in open connection with the environment at least at one point.

4. Injection moulding machine according to claim 3, **characterised in that** the annular space (6) is in open connection with the environment on the side remote from the support element (1).

5. Injection moulding machine according to any one of claims 1 to 4, **characterised in that** the casing (4) is tightly connected to the support element (1).

6. Injection moulding machine according to any one of claims 1 to 5, **characterised in that** the connection device or the connection devices (8) are arranged in the region of the casing (4) on the support element side.

7. Injection moulding machine according to any one of claims 1 to 6, **characterised in that** the casing (4) consists of two substantially semi-cylindrical profiles which are sealed relative to one another.

8. Injection moulding machine according to claim 7, **characterised in that** the profiles are sealed relative to one another with rubber seals.

9. Injection moulding machine according to claim 7 or claim 8, **characterised in that** the profiles are connected to one another by pipe clamps.

10. Injection moulding machine according to any one of the preceding claims, **characterised in that** the support element (1) is a rigid or movable mould mounting plate of an injection moulding machine.

11. Injection moulding machine according to any one of the preceding claims, **characterised in that** the column (2) is a rigid or movable closing column of an injection moulding machine.

12. Injection moulding machine according to any one of the preceding claims, **characterised in that** the connection device or the connection devices (8) are formed as connection pipes.

13. Casing for an injection moulding machine according to any one of claims 1 to 12, **characterised in that** two substantially semi-cylindrical profiles are provided which can be connected to one another in a sealing manner, and at least one connection device (8) is provided on one or both profiles via which the space enclosed by the profiles can be connected to a suction device.

14. Casing according to claim 13, **characterised in that** means are provided to fasten the profiles to a support element (1) of the injection moulding machine.

15. Casing according to claim 13 or 14, **characterised in that** rubber seals are provided to seal the substantially semi-cylindrical profiles with respect to one another.

16. Casing according to claim 13 to 15, **characterised in that** pipe clamps are provided to connect the substantially semi-cylindrical profiles.

17. Casing according to claim 13 to 16, **characterised in that** the substantially semi-cylindrical profiles are themselves substantially air-tight.

18. Casing according to any one of claims 13 to 17, **characterised in that** means are formed to seal the substantially semi-cylindrical profiles relative to the support element (1).

19. Casing according to any one of claims 14 to 18, **characterised in that** the connection device or connection devices (8) are arranged on the side of the profiles on which the means for fastening to the support element (1) are also located.

20. Casing according to any one of claims 13 to 19, **characterised in that** the connection device or connection devices (8) are formed as connection pipes.

## Revendications

1. Machine de moulage par injection avec une unité de plastification et une unité d'obturation, l'unité d'obturation comprenant au moins une colonne (2), qui traverse entièrement un élément de support (1) et qui est mobile par rapport à celui-ci, **caractérisée en ce que** sur au moins une colonne (2) est prévue une enveloppe au moins partielle (4), qui est directement adjacente à l'élément de support (1), qui définit une cavité circulaire (6) entourant au moins partiellement la colonne (2) et qui comprend au moins un dispositif de raccordement (8) par l'intermédiaire duquel la cavité circulaire (6) peut être reliée avec un dispositif d'aspiration.

2. Machine de moulage par injection selon la revendication 1, **caractérisée en ce que** l'enveloppe (4) elle-même est sensiblement étanche à l'air.

3. Machine de moulage par injection selon la revendication 1 ou la revendication 2, **caractérisée en ce que** la cavité circulaire (6) est en liaison ouverte avec l'environnement à au moins un endroit.

4. Machine de moulage par injection selon la revendication 3, **caractérisée en ce que** sur le côté opposé à l'élément de support (1), la cavité circulaire (6) est en liaison ouverte avec l'environnement.

5. Machine de moulage par injection selon l'une quelconque des revendications 1 à 4, **caractérisée en ce que** l'enveloppe (4) est reliée de manière étanche avec l'élément de support (1).

6. Machine de moulage par injection selon l'une quelconque des revendications 1 à 5, **caractérisée en ce que** le dispositif de raccordement ou les dispositifs de raccordement (8) est(sont) disposé(s) dans la zone de l'enveloppe (4) située du côté de l'élément de support.

7. Machine de moulage par injection selon l'une quelconque des revendications 1 à 6, **caractérisée en ce que** l'enveloppe (4) se compose de deux profilés sensiblement en forme de demi-cylindres rendus étanches entre eux.

8. Machine de moulage par injection selon la revendication 7, **caractérisée en ce que** les profilés sont rendus étanches entre eux à l'aide de joints en caoutchouc.

9. Machine de moulage par injection selon la revendication 7 ou la revendication 8, **caractérisée en ce que** les profilés sont reliés entre eux par l'intermédiaire de colliers de tubes.

10. Machine de moulage par injection selon l'une quelconque des revendications précédentes, **caractérisée en ce que** l'élément de support (1) est une platine de serrage d'outils fixe ou mobile d'une machine de moulage par injection.

11. Machine de moulage par injection selon l'une quelconque des revendications précédentes, **caractérisée en ce que** la colonne (2) est une colonne d'obturation fixe ou mobile d'une machine de moulage par injection.

12. Machine de moulage par injection selon l'une quelconque des revendications précédentes, **caractérisée en ce que** le dispositif de raccordement ou les dispositifs de raccordement (8) est(sont) configuré(s) comme embout(s) de raccordement.

13. Enveloppe pour une machine de moulage par injection selon l'une quelconque des revendications 1 à 12, **caractérisée en ce que** deux profilés sensiblement en forme de demi-cylindres, qui peuvent être reliés entre eux de manière à former une étanchéité, sont prévus et **en ce que** sur l'un des profilés ou sur les deux est prévu au moins un dispositif de raccordement (8), par l'intermédiaire duquel la cavité formée par les profilés peut être mise en liaison avec un dispositif d'aspiration.

14. Enveloppe selon la revendication 13, **caractérisée en ce que** des moyens sont prévus pour fixer les profilés sur un élément de support (1) de la machine de moulage par injection.

15. Enveloppe selon la revendication 13 ou 14, **caractérisée en ce que** des joints en caoutchouc sont prévus pour réaliser l'étanchéité réciproque des profilés sensiblement en forme de demi-cylindres.

16. Enveloppe selon la revendication 13 à 15, **caractérisée en ce que** des colliers pour tubes sont prévus pour relier les profilés sensiblement en forme de demi-cylindres.

17. Enveloppe selon la revendication 13 à 16, **caractérisée en ce que** les profilés sensiblement en forme de demi-cylindres eux-mêmes sont sensiblement étanches à l'air.

18. Enveloppe selon l'une quelconque des revendications 13 à 17, **caractérisée en ce que** des moyens sont mis en forme pour assurer l'étanchéité entre les profilés sensiblement en forme de demi-cylindres et l'élément de support (1).

19. Enveloppe selon l'une quelconque des revendications 14 à 18, **caractérisée en ce que** le dispositif de raccordement ou les dispositifs de raccordement (8) est(sont) disposé(s) sur le côté des profilés sur lequel se trouvent aussi les moyens pour la fixation sur l'élément de support (1).

20. Enveloppe selon l'une quelconque des revendications 13 à 19, **caractérisée en ce que** le dispositif de raccordement ou les dispositifs de raccordement (8) est(sont) configuré(s) comme embout(s) de raccordement.
